# EUROPÄISCHE PATENTANMELDUNG

(11) **EP 1 288 581 A2**
(43) Veröffentlichungstag der Anmeldung: **05.03.2003**
(21) Anmeldenummer: 02019514.5
(22) Anmeldetag: 31.08.2002
(51) Int. Cl.: F24D 11/02

(54) **Kompaktheizgerät**

(30) Priorität: 31.08.2001 DE 10142779; 11.06.2002 DE 20208995 U
(71) Anmelder: Viessmann Werke GmbH & Co, 35108 Allendorf (DE)
(72) Erfinder: Strauss, Rolf-Peter, Prof. Dr., 28215 Bremen (DE); Hafner, Bernd, Dr., 35108 Allendorf (DE); Christ, Hans, 35066 Frankenberg (DE); Böhle, Werner, 35066 Frankenberg (DE); Weber, Helmut, 35216 Biedenkopf (DE)
(74) Vertreter: Wolf, Günter, Dipl.-Ing.

(57) **Zusammenfassung**

Die Erfindung betrifft ein Kompaktheizgerät, bestehend aus in einem Gehäuse (1) angeordneten Wärmeerzeuger (2), aus Wärmetauschelementen (3) für die Umsetzung erzeugter und/oder von außen zugeführter Wärme, wobei der Wärmeerzeuger (2) und die Wärmetauschelemente (3) mit einem mit KW/WW-Anschlüssen (4,5) und Heizer (6) versehenen, wärmeisolierten Brauchwasserspeicher (7) verschaltet sind.

Erfindungsgemäß sind zur Ausbildung von drei wahlweise gemeinsam, paarweise oder einzeln zur Wirkung bringbaren Hydraulikkreisen (I,II,III) der Speicher (7) brauchwasser- oder heizseitig, der Wärmeerzeuger (2,2',2") und die Wärmetauschelemente (3) zwischen Hydraulikstränge (8,8') geschaltet, wobei ein pumpenbestückter Zulaufstrang (9) zum Wärmeerzeuger (2) an ein Dreiwegeventil (10) angeschlossen ist, dessen beide anderen Anschlüsse (11,12) mit dem Speicher (7) oder dessen Heizer (6) und den Elementen (3) zur Wärmeumsetzung verschaltet sind.

## Beschreibung

Die vorliegende Erfindung betrifft ein Kompaktheizgerät insbesondere für sogenannte Niedrigenergie-und Passivhäuser, bestehend aus in einem Umschließungsgehäuse angeordneten Wärmeerzeuger, aus Wärmetauschelementen für die Umsetzung erzeugter und/oder von außen zugeführter Wärme, wobei der Wärmeerzeuger und die Wärmetauschelemente mit einem mit KW/WW-Anschlüssen und Heizer versehenen, wärmeisolierten Brauchwasserspeicher verschaltet sind.

Heizgeräte dieser allgemein definierten Art sind insoweit hinlänglich bekannt und in Benutzung, als daß es diesbezüglich an sich keines druckschriftlichen Nachweises bedarf, der insoweit aber auch nicht direkt erbracht werden kann. Zum in etwa einschlägigen Stand der Technik sei jedoch verwiesen auf die EP-A-0 676 594 A2 und die DE-A-199 12 569 A1. Gegenstand der genannten EP-A- ist eine mit Wärmepumpe betriebene Gebäudeheizungsanlage, und beim Gegenstand der genannten DE-A- handelt es sich um einen Wärmeerzeuger in Form eines Brennwertkessels für Heizzwecke und Warmwasserbereitung, wobei dieser mit einem Speicher kombinierte Wärmeerzeuger durchaus auch schon als Kompaktheizgerät gelten kann. Der Einbezug der Nutzung von Sonnenenergie, der im Bereich von Niedrigenergie- und Passivhäusern von besonderem Interesse ist, ist zumindest bei den vorerwähnten Gegenständen nicht in Betracht gezogen.

Im vorliegend hauptsächlich in Betracht gezogenen Einsatzbereich von Kompaktheizgeräten in Niedrigenergie- und Passivhäusern ist es aber praktisch zwingend, der Nutzung von Sonnenenergie Rechnung zu tragen, und außerdem sind auch Gestaltungsmöglichkeiten im Sinne der EP-A-0 676 594 und der DE-A-199 12 569 zu berücksichtigen, d.h., ein Hersteller, der ein Kompaktheizgerät für Niedrigenergie- bzw. Passivhäuser konzipieren möchte, steht vor dem Problem, diese Aspekte zumindest insoweit zu berücksichtigen, daß von einer Grundkonzeption ausgegangen werden kann, die auf möglichst einfache Weise und mit möglichst geringem Verschaltungsaufwand unter Beibehaltung einer kompakten Bauweise zu verwirklichen ist, und zwar verbunden mit der Maßgabe, ein derartiges Kompaktheizgerät durch einfaches Umschalten an jahreszeitlich bedingte Bedarfsanforderungen anpassen zu können, worin auch die der vorliegenden Erfindung zugrundeliegende Aufgabe besteht.

Diese Aufgabe ist mit einem Kompaktheizgerät nach der Erfindung durch die im unabhängigen Partentanspruch 1 angeführten Merkmale gelöst.
Vorteilhafte Weiterbildungen und Ausführungsformen ergeben sich nach den abhängigen, im Einzelnen noch näher zu erläuternden Patentansprüchen.

Mit dieser erfindungsgemäßen Verschaltungsausbildung für ein Kompaktheizgerät werden einerseits alle nachfolgend angeführten Betriebsfälle, die in der speziellen Beschreibung näher erläutert werden, mit einer minimalen Komponentenzahl abgedeckt, was andererseits aber auch wesentliche Voraussetzung für eine möglichst kompakte Gestaltung eines solchen Gerätes ist.

Mit einem solchen Kompaktgerät sind also folgende Betriebsfälle zu erfassen:
Heizen mit großer Heizlast und geringer Kollektorleistung;
Heizen mit geringer Heizlast; Anforderung von Brauchwasser und gegf. auch Kühlen, wobei die Möglichkeit der Kühlung bei Verwendung einer Wärmepumpe als Wärmeerzeuger voraussetzt, daß diese bzgl. Verdampfer und Kondensator umschaltbar bzw. reversibel sein muß.
Für den Wärmeerzeuger können, ohne die erfindungsgemäße Grundkonzeption ändern zu müssen, ein mit festem, flüssigem oder gasförmigem Brennstoff betreibbarer Wärmeerzeuger, eine Sole-Wärmepumpe oder auch eine Abluft-Wärmepumpe verwendet werden, wobei Letztere vorzugsweise mit einer kontrolierten Wohnungslüftung mit Wärmerückgewinnung verbunden ist.

Die Alternativmaßgabe im Oberbegriff "... Umsetzung erzeugter und/oder von außen zugeführter Wärme" berücksichtigt die Wärmeerzeugung aus Primärbrennstoffen, die Wärmebereitstellung aus verfügbarer Solarenergie, Erdwärme und aus genutzter Abwärme.
Die Alternativmaßgaben im Kennzeichen des unabhängigen Patentanspruches 1, nämlich "brauchwasser- oder heizseitig" und "mit dem Speicher oder dessen Heizer" nehmen dabei Rücksicht auf spezielle Verschaltungen des Speichers, die anhand von Ausführungsbeispielen noch näher erläutert werden.

Vorteilhaft und bevorzugt ist das hier wesentliche Dreiwegeventil Teil einer sogenannten Hydraulik-Baugruppe, die sämtliche Anschlüsse und Strömungspfade für den Wärmeerzeuger, den Speicher und die Elemente zur Wärmeumsetzung enthält und die auch für alle Betriebsarten und unabhängig davon, welche Art von Wärmeerzeuger zum Einsatz kommt, weitestgehend beibehalten bleibt und die insoweit ebenfalls zur kompakten Bauweise und Kostenersparnis beiträgt. Außerdem kann der Hersteller auf im wesentlichen gleiche Bau-Komponenten zurückgreifen, um Geräte für die unterschierdlichen Betriebsarten zusammenstellen zu können.

U.a. nach der vorerwähnten DE-A-199 12 569 A1 ist zwar die Anordnung der Schaltungskomponenten und des Wärmeerzeugers über dem Speicher in einem gemeinsamen Umschließungsgehäuse, wie auch bei der vorliegenden Erfindung vorgesehen, bekannt, d.h., Schutz dafür wird nur in unmittelbarer Verbindung mit den anderen hier geltend gemachten Ansprüchen beansprucht.

Das erfindungsgemäße Kompaktheizgerät und dessen vorteilhaften Weiterbildungen und Ausführungsformen werden nachfolgend anhand der zeichnerischen Darstellung von Ausführungsbeispielen näher erläutert.
Es zeigt schematisch
- Fig.1: das grundsätzlich für alle Ausführungsformen und Betriebsweisen geltende hydraulische Schaltschema;
- Fig.1A-D: der Fig.1 entsprechende Schaltschemata bei unter schiedlichen Betriebsweisen;
- Fig.2: perspektivisch ein konkretes Ausführungsbeispiel des Kompaktheizgeräte;
- Fig.2A: einen Längsschnitt durch den unteren Speicherteil des Gerätes;
- Fig.2B: einen Querschnitt längs Linie II-II in Fig.2A:
- Fig.3: das Schaltschema des Kompaktheizgerätes mit einer Gas-Brennwertzelle als Wärmeerzeuger;
- Fig.3A: schematisch die Verschaltung nach Fig.3 mit deutlicher Herausstellung eines Speicherladesystems;
- Fig.4: das Schaltschema des Kompaktheizgerätes mit einer Sole-Wärmepumpe als Wärmeerzeuger;
- Fig.5: das Schaltschema des Kompaktheizgerätes mit einer Abluftwärmepumpe und
- Fig.6: die hier sogenannte Hydraulik-Baugruppe bzw.-Platine.

Das Kompaktheizgerät besteht grundsätzlich und in bekannter Weise aus in einem Gehäuse 1 angeordneten Wärmeerzeuger 2, aus Wärmetauschelementen 3 für die Umsetzung erzeugter und/oder von außen zugeführter Wärme, wobei der Wärmeerzeuger 2 und die Wärmetauschelemente 3 mit einem mit KW/WW-Anschlüssen 4,5 und Heizer 6 versehenen Brauchwasserspeicher 7 verschaltet sind.

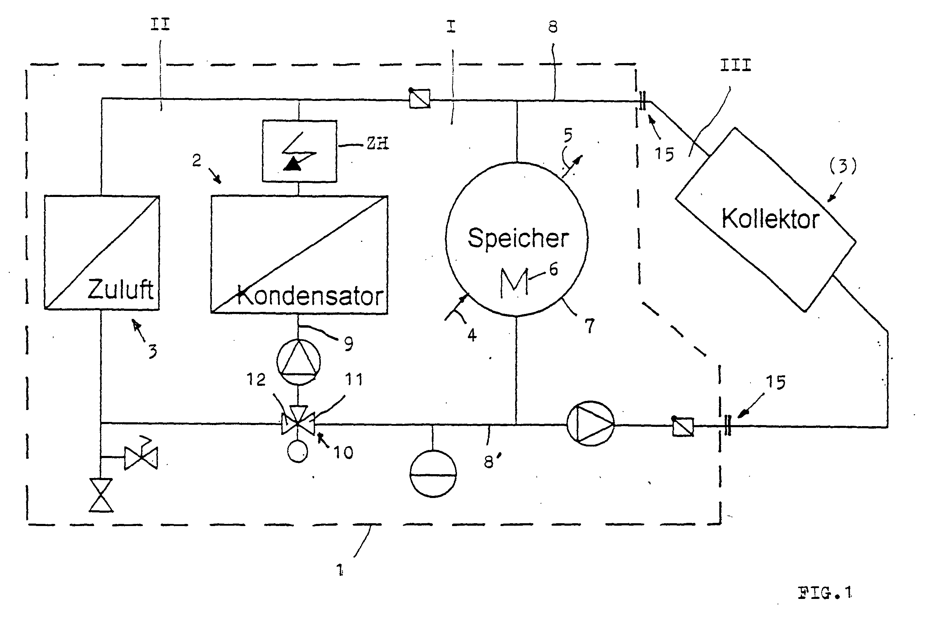

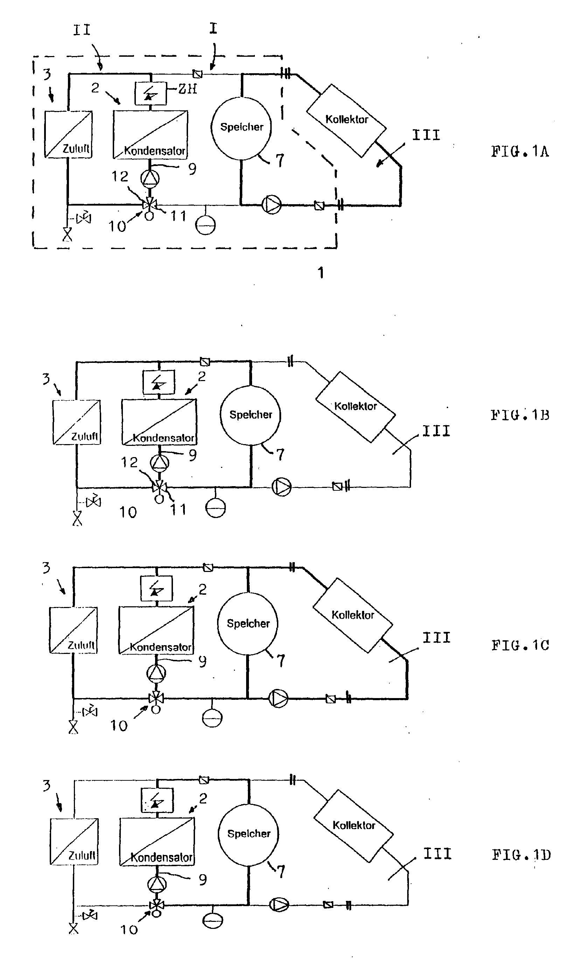

Unter Bezug auf die Fig.1 ist für ein solches Kompaktheizgerät nunmehr wesentlich, daß zur Ausbildung von drei wahlweise gemeinsam, paarweise oder einzeln zur Wirkung bringbaren Hydraulikkreisen I,II,III der Speicher 7 brauchwasser- oder heizseitig, der Wärmeerzeuger 2 und die Wärmetauschelemente 3 zwischen Hydraulikstränge 8,8' geschaltet sind, wobei ein pumpenbestückter Zulaufstrang 9 zum Wärmeerzeuger 2 an ein allein zur Einstellung der gemeinsamen, paarweisen oder einzeln Wirkbarmachung der drei Hydraulikkreise dienendes Dreiwegeventil 10 angeschlossen ist, dessen beide anderen Anschlüsse 11,12 mit dem Speicher 7 oder dessen Heizer 6 und den Elementen 3 zur Wärmeumsetzung verschaltet sind.

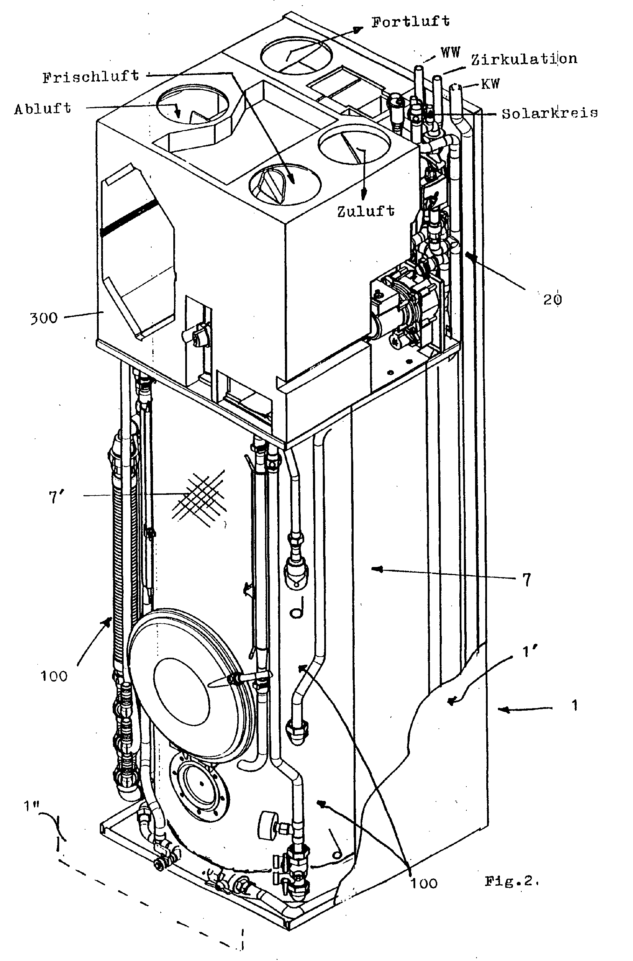

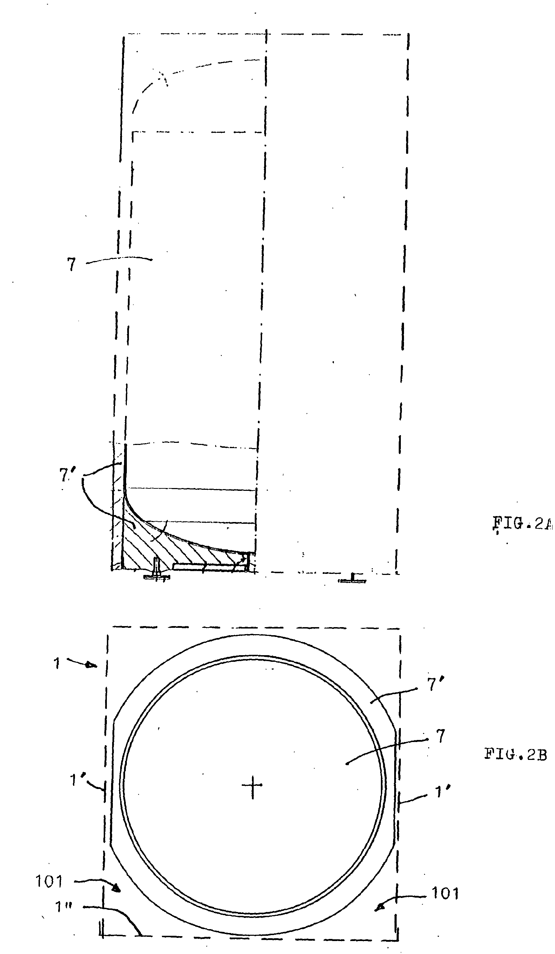

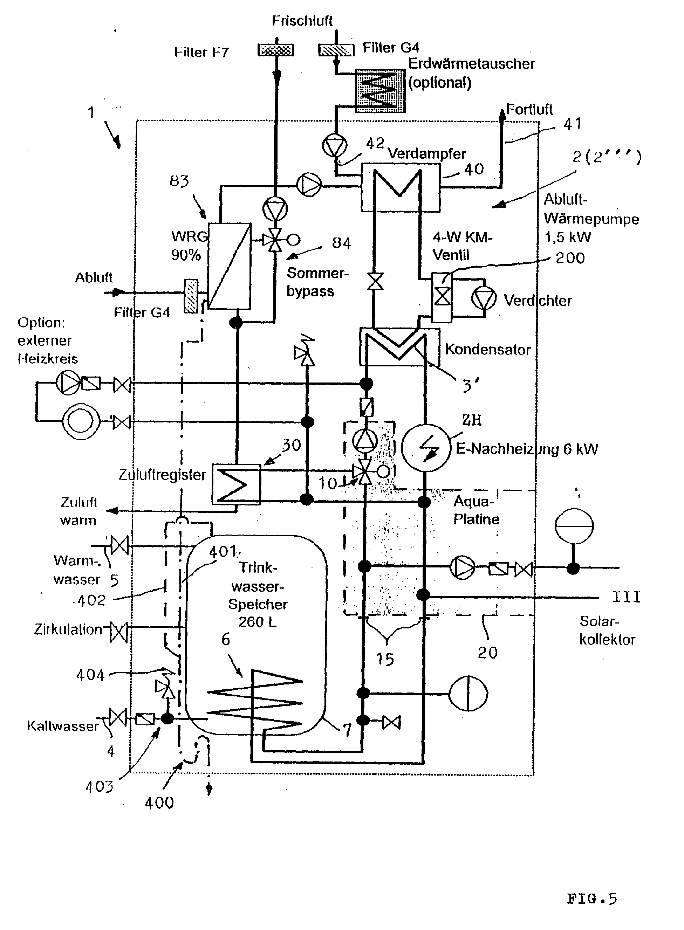

In Fig.2 ist das Kompaktheizgerät (mit nur angedeutem Umschließungsgehäuse 1 und einer Seitenwand 1') in seiner äußeren Form dargestellt, und zwar als Gerät mit einer Abluftwärmepumpe 2''' (siehe Fig.5). Das über dem Speicher 7 angeordnete Luftführungsgehäuse 300 sitzt dabei vor der Hydraulik-Baugruppe 20. Die Anschlüsse sind hierbei direkt beschriftet. Aus dieser Darstellung ergibt sich, daß die die Heizkreise bildenden Gerätekomponenten, wie Wärmeerzeuger, Brauchwasserspeicher, Wohnraumlüftungseinheit, deren zugehörige Verrohrung, zugehörige Steuer-und Regeleinheit und dgl., innerhalb des Umschließungsgehäuse 1 derart angeordnet sind, daß von der geöffneten (durch Abnahme des Frontverkleidungsbleches 1") Gehäusevorderseite aus alle Gerätekomponenten zugänglich und zugänglich machbar sind. Dafür ist die Lüftungseinheit, wie erwähnt, als einheitlicher, aus dem Gerät lösbarer, über dem Speicher 7 angeordneter Block 300 ausgebildet ist, hinter dem ein Teil der Geräteverrohrung als Hydraulikbaugruppe 20 und der Wärmeerzeuger 2 angeordnet sind. Damit erklärt sich auch die Maßgabe der vorerwähnten Zugänglichmachbarkeit, denn nach Herausnahme des Blockes 300 wird auch die gemäß Fig.2 dahinterbefindliche Hydraulikbaugruppe 20 zugänglich. Eine solche Zugänglichkeit ist aber für ein bzgl. seiner "Innereien" derart komplexes Kompaktgerät außerordentlich wichtig, welche kompakte Bauweise letztlich ihren Grund darin hat, daß bei den Abmessungen derartiger Geräte insbesondere den gängigen Rastermaße von bspw. Küchen in Niedrigenergiehäusern Rechnung getragen werden muß. Unter Verweis auf Fig.2A besteht in diesem Zusammenhang eine vorteilhafte Weiterbildung darin, daß die den Speicher 7 einhüllende Wärmeisolation 7' an den Seitenflanken parallel zu den Seitenwänden 1' des Gehäuses (1) abgeflacht ausgebildet und der Speicher 7 zudem wärmebrükkenfrei in seiner Wärmeisolation 7' gelagert ist. Um Platz zu sparen, könnte für die Wärmeisolation des Speichers 7 zwar auch eine an sich bekannte, wenig dick auftragende, so genannte Vakuumisolation benutzt werden. Solche Isolationen sind aber unverhältnismäßig teuer. Im übrigen hat sich gezeigt, daß die etwas dünnere Bemessung der Wärmeisolation 7' an den Speicherflanken des Speichers 7 durch die wärmebrückenfreie Einbindung des Speichers in diese wieder wettgemacht wird. Ferner ist die zum Speicher 7 gehörende, hier komplexe Verrohrung 100 des Gerätes in den beiden frontseitigen Zwickeln 101 zwischen dem im Querschnitt viereckigen Umschließungsgehäuse 1 und dem im Querschnitt zylindrischen Speicher 7 angeordnet, womit ebenfalls nicht nur der kompakten Bauweise sondern auch der Zugänglichkeit Rechnung getragen ist.

Am Beispiel der Schaltschemata nach den Fig. 1 A-D, denen in diesem Beispiel ebenfalls eine Abluft-Wärmepumpe als Wärmeerzeuger 2 und Wärmetauscher 3 als Wärmeumsetzer zugrundeliegt, werden nun zunächst die möglichen Betriebsweisen bei diesem System erläutert, wobei in den Fig.1 A-D die jeweils wirksamen Hydraulikkreise mit dickeren Strichen dargestellt sind.

### Fig. 1A Heizen mit großer Heizlast und geringer Kollektorleistung:

Bei großer Heizlast wird der als Wärmepumpe wirkende Wärmeerzeuger 2 und gegf. eine elektr. Zusatzheizung ZH mit dem Dreiwegeventil 10 auf den als Zuluftregister ausgebildeten Wärmetauscher 3 geschaltet. Die geringe Leistung des angeschlossenen Solarkollektors kann in den Speicher 7 geladen werden, ohne die Wärmepumpe zu beeinflussen.

### Fig.1B Heizen mit geringer Heizlast:

In diesem Fall wird das Dreiwegeventil 10 in regelbarer Mittelstellung geschaltet, wobei unter regelbar zu verstehen ist, daß die Wärmezufuhr vom Zuluftregister 30 bedarfsabhängig zu einer entsprechenden Vorlauftemperatur am Zuluftregister führend erfolgt. Die Wärmepumpe heizt das Zuluftregister 3 und den Speicher 7. Überschreitet die Temperatur im Speicher 7 die erwähnte Vorlauftemperatur plus Hysterese, wird die Wärmepumpe abgeschaltet. Das Zuluftregister 30 erhält seine Leistung aus dem unteren Bereich des Speichers 7, und zwar solange, bis die untere Speichertemperatur die Vorlauftemperatur minus Hysterese unterschreitet. Die Entladung des Speichers 7 in umgekehrter Richtung(Eingang kalt oben, Ausgang warm unten) wirkt sich insofern positiv auf das Regelverhalten aus, als sich im unteren Speicherbereich keine Temperaturschichtung aufbaut, die zu größeren Temperaturschwankungen im Kreislauf führen würde. Auch in diesem Falle kann gemäß **Fig.1C verfügbare Sonnenenergie in** **den Kreis eingekoppelt** werden, wobei je nach Kollektorleistung die Wärmepumpe zugeschaltet wird.
Durch die Reduzierung der Leistung am Zuluftregister auf den jeweils vom betreffenden Haus aktuell angeforderten Bedarf und eine Pufferung der überschüssigen Leistung im Speicher 7 kann die Vorlauftemperatur der Wärmepumpe im Jahresmittel deutlich gesenkt werden. Statt der vollen Leistung und damit vollen Temperaturdifferenz von ca. 30-35 K zur Raumtemperatur am Zuluftregister beträgt die Differenz in diesem Falle nur ca. 20 K (das Haus hat im Mittel nur die halbe Heizleistung der Auslegungsleistung nötig!). Der Wirkungsgrad der Wärmepumpe wird also nennenswert erhöht.

### Fig.1D Anforderung von Brauchwasser:

Bei fehlender Kollektorleistung erwärmt die Wärmepumpe, gegf. mit Zuschaltung des elektr. Zusatzheizers ZH, den Speicher 7. Bei ausreichender Kollektorleistung gilt wieder Fall Fig.1 A

Aus den Fig.1 A-D wird deutlich, daß die gemeinsame, paarweise oder einzelne Wirkbarmachung der Hydraulikkreise I,II,III im wesentlichen allein durch die jeweilige Einstellung des Dreiwegeventiles 10 erfolgt.
Bei der Ausführungsform nach Fig.5, die den Fig.1A-1D zugrundeliegt, handelt es sich um ein Kompaktheizgerät, bei dem der Wärmeerzeuger 2 ein solche Abluft-Wärmepumpe 2''' ist. Deren Wärmetauscher 3' ist via Dreiwegeventil 10 und Hydraulik-Baugruppe 20 zum einen mit dem Heizer 6 des Speichers 7 verbunden, der wiederum zum Teil über die gleiche Leitungsführung in der Baugruppe 20 mit Anschlüssen 15 für den Kollektorkreis III in Verbindung steht. Dabei ist zum anderen der Wärmeerzeuger 2 ebenfalls via Dreiwegeventil 10 und Hydraulik-Baugruppe 20 mit einem frischluftbeschickbaren Zuluftwärmetauscher 30 verbunden, wobei ferner der Verdampfer 40 der Wärmepumpe 2''' außer seiner Abluft/Fortluftführung 41 mit einem Frischluftanschluß 42 versehen ist.

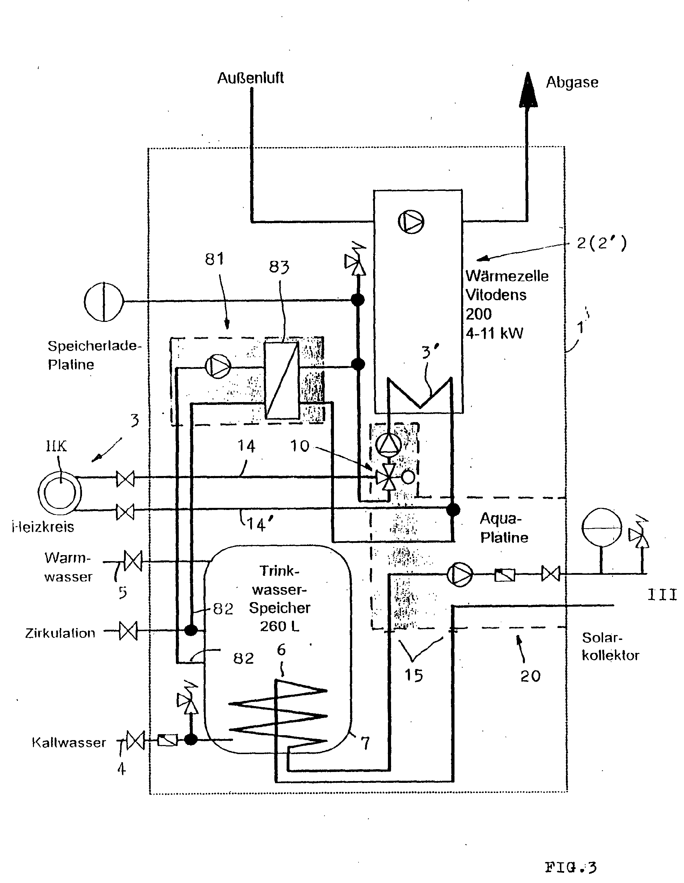

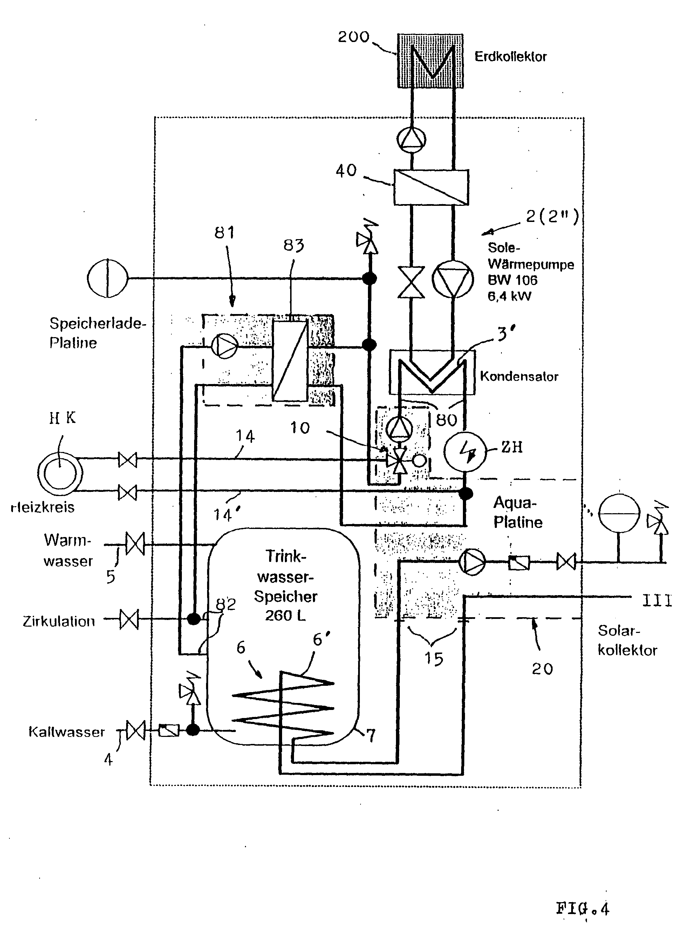

Fig.3 verdeutlicht anhand einer konkreten Ausführungsform das vorbeschriebene Schaltungsschema dahingehend, daß der Wärmeererzeuger 2 bspw. eine Gas-Brennwert-Einheit 2' ist, deren Wärmetauscher 3' via Dreiwegeventil 10 und Hydraulik-Baugruppe 20 mit der Brauchwasserseite des Speicher 7 verbunden ist und mit Heizkreisanschlüssen 14,14' in Verbindung steht, wobei die Hydraulik-Baugruppe 20 mit Anschlüssen 15 für den Kollektorkreis III versehen ist, die zum Heizer 6 des Speichers 7 führen.
Das Wärmetauschelement 3 zur Umsetzung der von der Gas-Brennwert-Einheit 2' erzeugten Wärme wird in diesem Falle vom bei 14,14' des Kompaktheizgerätes angeschlossenen Heizkreis HK repräsentiert. Die sonstigen zur Hydraulikschaltung gehörenden Elemente, wie Pumpen, Rückschlagventile, Ausdehnungsgefäße, sonstige Ventile sind durch entsprechende Symbole dargestellt und bedürfen insoweit keiner näheren Erläuterung, was auch für die Darstellungen der Fig.4 und 5 gilt.
Verwiesen sei aber hierzu noch auf Fig.3A, die die Verschaltung gemäß Fig.3 nochmals prinzipiell darstellt, und zwar einschließlich der Einbindung eines Speicherladesystems 81. Auf eine Pufferung des Wärmezellen-Kreises kann im Gegensatz zum vorbeschrieben System der Abluft-wärmenutzung verzichtet werden, da sich die Gas-Wärmezelle ausreichend in ihrer Leistung bedarfsangepaßt modulieren läßt.

Gleiches gilt auch für das ebenfalls ein Speicherladesystem 81 enthaltende Ausführungsbeispiel nach Fig.4, das sich insofern vom vorbeschriebenen unterscheidet, als hierbei der Wärmeerzeuger 2 eine Sole-Wärmepumpe 2" ist, deren Wärmetauscher 3' via Dreiwegeventil 10 und Hydraulik-Baugruppe 20 via Speicherladesystem 81 mit der Brauchwasserseite des Speichers 7 verbunden ist und mit Heizkreisanschlüssen 14,14' in Verbindung steht, wobei die Hydraulik-Baugruppe 20 mit Anschlüssen 15 für den Kollektorkreis III versehen ist, die zum Heizer 6 des Speichers 7 führen. Der Verdampfer 40 der Wärmepumpe 2" ist in diesem Falle bspw. mit einem Erdkollektor bzw. Erdwärmetauscher 200 verbunden.

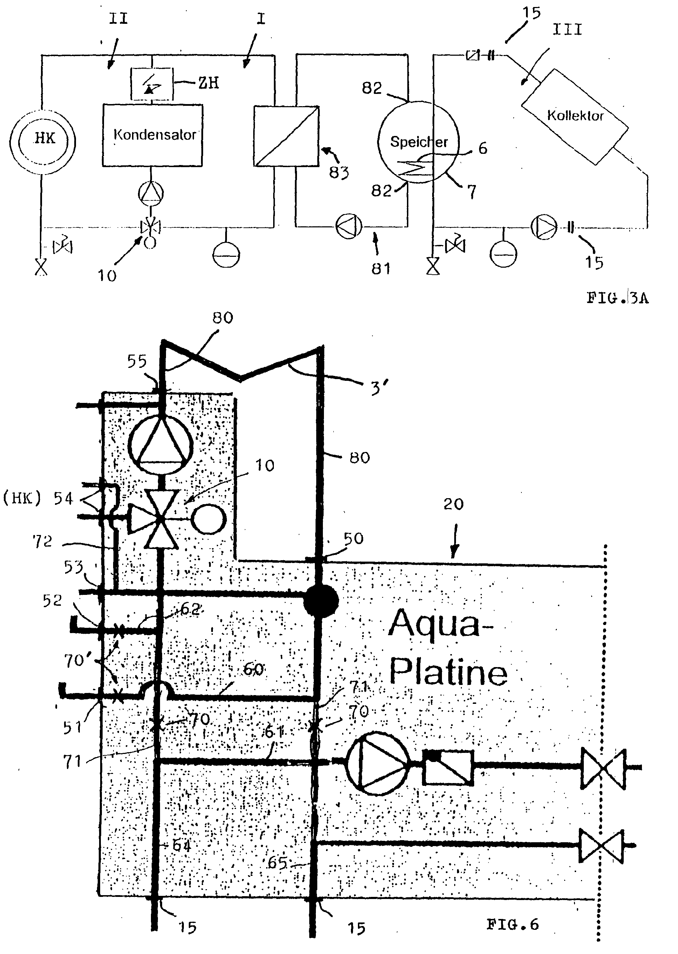

Um im Interesse einer Serienfertigung der Hydraulik-Baugruppe 20 diese (bei per se gegebener Identität für die Ausführungsformen nach den Fig.3,4) auch für die Ausführungsform nach Fig.5 benutzen zu können, wird auf Fig.6 verwiesen, wonach das Dreiwegeventil 10 Teil der Hydraulik-Baugruppe 20 ist, die sämtliche Anschlüsse 50-55 und 15 und Strömungspfade 60-65 für den Wärmeerzeuger 2, den Speicher 7 und die Elemente 3 zur Wärmeumsetzung enthält. Dabei sind in dieser Baugruppe 20, die auch als sogenannte Hydraulik-Platine ausgebildet sein kann, die vom Wärmetauscher 3' des Wärmeerzeugers 2 abgehenden Strömungswege 80 mit denen zu den Kollektoranschlüssen 15 führenden Strängen 64,65 durch mit bspw. Absperrelementen 70 versehenen Kanälen 71 verbunden. Außerdem sind Abzweigleitungen 72 für den optionalen Anschluß eines Wärmeverbrauches HK vorgesehen, und schließlich sind in den zur Brauchwasserseite des Speichers 7 führenden Strömungswegen 60,62 ebenfalls Absperrelemente 70' angeordnet.
Bzgl. der Absperrelemente 70,70' sei darauf hingewiesen, daß dies keine aufwendigen Absperrventile sein müssen, sondern die betreffenden Kanalausbildungen an einer Platine 20 können einfach zugequetscht werden, wenn die in Fig.6 schematisch dargestellte Platine 20 bei den Ausführungsformen nach den Fig. 3,4 Verwendung finden sollen.
Bei Ausführung der Baugruppe 20 aus einer Verrohrung im Sinne der Fig.2 können statt der Absperrelemente 70,70' einfach auch entnehmbare kleine Rohrabschnitte vorgesehen werden, wobei dann diese, bei Verwendung im Rahmen der Verschaltungen nach den Fig.3,4 weggelassen und die betreffenden Hydraulikstränge verschlossen werden.

Vorteilhaft ist ferner der Speicher 7, obgleich bei Betrieb mit einer Abluft-Wärmepumpe gemäß Fig.5 nicht erforderlich, mit Anschlüssen 82 für den Anschluß des Speicherladesystems 81 mit WT 83 versehen.

Zusätzlich vorteilhafte Weiterbildungen bestehen in Folgendem:
Um bei Ausführungsform des Gerätes nach Fig.5 diese auch jahreszeitenabhängig zum Kühlen nutzen zu können, ist im Kreis der Wärmepumpe 2''' ein 4-W KM-Umschaltventil 200 zur Umschaltung der Pumpe auf Kühlung angeordnet.
Sofern bei Ausführungsformen des Kompaktgerätes Kondensat anfällt, muß für dessen Abfluß gesorgt werden, was in der Regel über eine mit Siphon 400 bestückte Abflußleitung erfolgt (siehe hierzu ebenfalls Fig.5). In Perioden mehr oder weniger hoher Außentemperaturen fällt allerdings kein Kondensat an, was früher oder später zu einer Austrocknung des Siphons und damit zu Geruchsbelastungen führt, die insbesondere an solchen Geräten nicht hinnehmbar sind. Um auch diesem Aspekt Rechnung zu tragen ist vorgesehen, daß der für eine Wärmerückgewinnung vorgesehene Wärmetauscher 83 mit einer mit Siphon 400 bestückten Kondensatableitung 401 versehen ist, in die zulaufseitig vor dem im unteren Bereich des Gehäuses 1 angeordneten Siphon 400 eine vom Sicherheitsüberlauf 7' oder von einer Brauchwassersicherheitsgruppe 404 des Speichers 7 weiterführende Leitung 402 einmündent angeordnet ist. Da warmes bzw. heißes Brauchwasser immer benötigt wird, ist auf diese einfache Weise auch dafür gesorgt, daß der Siphon 400 seine Geruchsverschlußfunktion erfüllt.

Um eine Vorstellung zu vermitteln, welche Abmessungen mit einem solchen erfindungsgemäß ausgebildeten Gerät erreichbar sind, sei angeführt, daß sich bspw. bei einem Speichervolumen von 240 Litern und komplex verschalteter Innenkomponenten eine Gerätegröße (H x B x T) in der Größenordnung von maximal 200 x 60 x 67 cm³ bei einem Gewicht von ca. 250 kg erreichbar ist.

## Patentansprüche

1. Kompaktheizgerät, bestehend aus in einem Gehäuse (1) angeordneten Wärmeerzeuger (2), aus Wärmetauschelementen (3) für die Umsetzung erzeugter und/oder von außen zugeführter Wärme,
wobei der Wärmeerzeuger (2) und die Wärmetauschelemente (3) mit einem mit KW/WW-Anschlüssen (4,5) und Heizer (6) versehenen, wärmeisolierten Brauchwasserspeicher (7) verschaltet sind,
wobei zur Ausbildung von drei wahlweise gemeinsam, paarweise oder einzeln zur Wirkung bringbaren Hydraulikkreisen (I,II,III) der mit Sicherheitsüberlauf (7") versehene Speicher (7) brauchwasser- oder heizseitig, der Wärmeerzeuger (2,2',2") und die Wärmetauschelemente (3) zwischen Hydrauliksträngen (8,8') geschaltet sind, ein pumpenbestückter Zulaufstrang (9) zum Wärmeerzeuger (2) an einem Anschluß eines allein zur Einstellung der gemeinsamen, paarweise oder einzelnen Wirkbarmachung der drei Hydraulikkreise dienenden Dreiwegeventils (10) angeschlossen ist, dessen beide anderen Anschlüsse (11,12) mit dem Speicher (7) oder dessen Heizer (6) und den Elementen (3) zur Wärmeumsetzung verschaltet sind.

2. Heizgerät nach Anspruch 1,
**dadurch gekennzeichnet,**
**daß** die die Heizkreise bildenden Gerätekomponenten, wie Wärmeerzeuger, Brauchwasserspeicher, Wohnraumlüftungseinheit, deren zugehörige Verrohrung, zugehörige Steuer-und Regeleinheit und dgl., innerhalb des als Umschließungsgehäuse ausgebildeten Gehäuses (1) derart angeordnet sind, daß von der geöffneten Gehäusevorderseite aus alle Gerätekomponenten zugänglich und zugänglich machbar sind.

3. Heizgerät nach Anspruch 2,
**dadurch gekennzeichnet,**
**daß** die Lüftungseinheit als einheitlicher, aus dem Gerät lösbarer, über dem Speicher (7) angeordneter Block (300) ausgebildet ist, hinter dem ein Teil der Geräteverrohrung, als Hydraulikbaugruppe (20) und der Wärmeerzeuger (2) angeordnet sind.

4. Heizgerät nach Anspruch 2 oder 3,
**dadurch gekennzeichnet,**
**daß** die den Speicher (7) einhüllende Wärmeisolation (7') an den Seitenflanken parallel zu den Seitenwänden (1') des Gehäuses (1) abgeflacht ausgebildet und der Speicher (7) wärmebrükkenfrei in seiner Wärmeisolation (7') gelagert ist.

5. Heizgerät nach einem der Ansprüche 2 bis 4,
**dadurch gekennzeichnet,**
**daß** die zum Speicher (7) gehörende Verrohrung (100) in den beiden frontseitigen Zwickeln (101) zwischen im Querschnitt viereckigen Umschließungsgehäuse (1) und im Querschnitt zylindrischen Speicher (7) angeordnet ist.

6. Heizgerät nach einem der Ansprüche 1 bis 5,
**dadurch gekennzeichnet,**
**daß** der als Rohrwendel-Innenheizer ausgebildete Heizer (6) des Speichers mit Anschlüssen (15) für die Zuschaltung des Solar-Kollektorkreises (III) verbunden ist.

7. Heizgerät nach einem der Ansprüche 1 bis 6,
**dadurch gekennzeichnet,**
**daß** der Speicher (7) mit Anschlüssen (82) für ein Speicherladesystem (81) versehen ist, dessen Wärmetauscher (83) via Dreiwegeventil (10) mit dem Wärmetauscher (3') des Wärmeerzeugers (2',2") verschaltet ist.

8. Heizgerät nach einem der Ansprüche 3 bis 7,
**dadurch gekennzeichnet,**
**daß** das Dreiwegeventil (10) Teil der Hydraulik-Baugruppe (20) ist, die sämtliche Anschlüsse (50-55 und 15) und Strömungspfade (60-65) für den Wärmeerzeuger (2), den Speicher (7) und die Elemente (3) zur Wärmeumsetzung enthält, und daß in der Hydraulik-Baugruppe (20) die vom Wärmetauscher (3') des Wärmeerzeugers (2) abgehenden Strömungswege (80) mit denen zu den Kollektoranschlüssen (15) führenden Strängen (64,65) durch mit Sperrelementen (70) versehenen Kanälen (71) verbunden sind und außerdem Abzweigleitungen (72) für den optionalen Ans'chluß eines Wärmeverbrauches (HK), wobei in den zur Brauchwasserseite des Speichers (7) führenden Strömungswegen (60,62) ebenfalls Absperrelemente (70') angeordnet sind.

9. Heizgerät nach einem der Ansprüche 1 bis 8,
**dadurch gekennzeichnet,**
**daß** der Wärmeerzeuger (2) ein mit festem, flüssigem oder gasförmigem Brennstoff betreibbarer Wärmeerzeuger (2') ist, dessen Wärmetauscher (3') via Dreiwegeventil (10) und Hydraulik-Baugruppe (20) mit der Brauchwasserseite des Speicher (7) verbunden ist und mit Heizkreisanschlüssen (14,14') in Verbindung steht, wobei die Hydraulik-Baugruppe (20) mit Anschlüssen (15) für einen Kollektorkreis (III) versehen ist, die zum Heizer (6) des Speichers (7) führen.

10. Heizgerät nach einem der Ansprüche 1 bis 8,
**dadurch gekennzeichnet,**
**daß** der Wärmeerzeuger (2) eine Sole-Wärmepumpe (2") ist, deren Wärmetauscher (3') via Dreiwegeventil (10) und Hydraulik-Baugruppe (20) mit der Brauchwasserseite des Speichers (7) verbunden ist und mit Heizkreisanschlüssen (14,14') in Verbindung steht, wobei die Hydraulik-Baugruppe (20) mit Anschlüssen (15) für einen Solar-Kollektorkreis (III) versehen ist, die zum Heizer (6) des Speichers (7) führen.

11. Heizgerät nach einem der Ansprüche 1 bis 8,
**dadurch gekennzeichnet,**
**daß** der Wärmeerzeuger (2) eine Abluft-Wärmepumpe (2''') ist, deren Wärmetauscher (3') via Dreiwegeventil (10) und Hydraulik-Platine (20) zum einen mit dem Heizer (6) des Speichers (7) verbunden ist, der wiederum zum Teil über die gleiche Leitungsführung in der Hydraulik-Baugruppe (20) mit Anschlüssen (15) für einen Kollektorkreis (III) in Verbindung steht, wobei zum anderen der Wärmeerzeuger (2) ebenfalls via Dreiwegeventil (10) und Hydraulik-Baugruppe (20) mit einem frischluftbeschickbaren Zuluftwärmetauscher (30) verbunden ist.

12. Heizgerät nach Anspruch 11,
**dadurch gekennzeichnet,**
**daß** der Verdampfer (40) der Wärmepumpe (2''') zwecks Wärmerückgewinnung aus der Abluft mit einem Abluft/Frischluftwärmetauscher (83) verbunden ist, der mit einem zum Zuluftwärmetauscher (30) führenden Sommerbypaß (84) überbrückbar ist.

13. Heizgerät nach Anspruch 11 oder 12,
**dadurch gekennzeichnet,**
**daß** der Verdampfer (40) der Wärmepumpe (2''') zusätzlich mit einem über einen Erdwärmetauscher (200) geführten Frischluftanschluß (42) versehen ist.

14. Heizgerät nach einem der Ansprüche 11 bis 13,
**dadurch gekennzeichnet,**
**daß** im Leitungsstrang (63) zwischen Dreiwegeventil (10) und Wärmetauscher (3') der Wärmepumpe (2''') und im zum Zuluftwärmetauscher (30) führenden Leitungsstrang (66) Abzweiganschlüsse (67) für einen Heizkreis angeordnet sind.

15. Heizgerät nach einem der Ansprüche 11 bis 14,
**dadurch gekennzeichnet,**
**daß** im Kreis der Wärmepumpe (2''') ein 4-W KM-Umschaltventil (200) zur Umschaltung der Pumpe auf Kühlung angeordnet ist,.

16. Heizgerät nach Anspruche 12,
**dadurch gekennzeichnet,**
**daß** der für eine Wärmerückgewinnung vorgesehene Wärmetauscher (83) mit einer mit Siphon (400) bestückten Kondensatableitung (401) versehen ist, in die zulaufseitig vor dem im unteren Bereich des Gehäuses (1) angeordneten Siphon (400) eine vom Sicherheitsüberlauf (7') oder von einer Brauchwassersicherheitsgruppe (404) des Speichers (7) weiterführende Leitung (402) einmündent angeordnet ist.
